# EUROPEAN PATENT SPECIFICATION

(11) **EP 2 325 239 B1**
(45) Date of publication and mention of the grant of the patent: **26.03.2014**
(21) Application number: 10190855.6
(22) Date of filing: 11.11.2010
(51) Int. Cl.: C08J 7/04, B05D 5/08, B05D 7/00, B32B 27/08, C09D 127/14, C09J 7/02

(54) **Multilayer sheet**
Mehrlagenblech
Feuille multicouche

(30) Priority: 12.11.2009 JP 2009258574; 07.10.2010 JP 2010227220
(43) Date of publication of application: 25.05.2011
(73) Proprietor: NITTO DENKO CORPORATION, Osaka 567 (JP)
(72) Inventor: Kai, Makoto, Ibaraki-shi Osaka 567-8680 (JP); Nakagawa, Yoshio, Ibaraki-shi Osaka 567-8680 (JP); Uesugi, Masanori, Ibaraki-shi Osaka 567-8680 (JP); Oosawa, Yuka, Ibaraki-shi Osaka 567-8680 (JP); Yamamoto, Yasunori, Ibaraki-shi Osaka 567-8680 (JP)
(74) Representative: Grünecker, Kinkeldey, Stockmair & Schwanhäusser

(56) References cited:
- GB-A- 2 081 727
- US-A- 5 965 256
- DATABASE CA [Online] CHEMICAL ABSTRACTS SERVICE, COLUMBUS, OHIO, US; 20 November 2009 (2009-11-20), KAI, MAKOTO ET AL: "Adhesive sheets for protecting coating films", XP002622432, retrieved from STN Database accession no. 2009:1435133 & JP 2009 299053 A (NITTO DENKO CORP) 24 December 2009 (2009-12-24)

## Description

### FIELD OF THE INVENTION

This invention relates to a multilayer sheet having a layer including polyurethane, particularly relates to a multilayer sheet having film durability.

### BACKGROUND OF THE INVENTION

Polyethylene terephthalate (PET), polypropylene (PP) and the like are known as transparent general purpose films, but a film having antifouling property, weather resistance, heat resistance and chemical resistance has been in demand in the field of electronic parts, outdoor type films and the like.

For example, a film of an acrylic polymer and a urethane polymer is known as a film which can reconcile high strength and high breaking elongation, and JP-T-2001-520127 (Patent Document 1) discloses a multilayer film including an interpenetrating polymer network layer (IPN layer) and at least one layer of a fluoro-containing polymer layer, as a surface protecting film of cars and the like. In addition, an IPN as a system which contains two independent crosslinked polymer networks is disclosed in Non-patent Document 1 and Non-patent Document 2. An IPN complex of a urethane polymer and an acrylic polymer is used in the IPN layer of this multilayer film which is obtained by applying a mixed liquid of an acrylic monomer, an acrylic crosslinking agent and a urethane crosslinked precursor of a polyol and a polyisocyanate on a substrate and respectively polymerizing and crosslinking the acrylic monomer and the urethane precursor, polyol/polyisocyanate, by heating in a nonintervention mode.

According to this method, there is an advantage in that a limitation (restriction) due to kind, combination, blending ratio and the like of the monomers used is hard to occur, but since the urethane polymerization is a polyaddition reaction which is slow in comparison with a chain reaction such as acrylic polymerization, there is a problem in terms of productivity.

When an attempt is made to obtain IPN layer by utilizing sequential synthesis and photopolymerization as disclosed in JP-A-2003-96140 (Patent Document 2) in order to solve this problem of productivity, the crosslinked urethane polymer comes into a swollen state in the presence of the acrylic monomer and the crosslinking agent, so that a problem has occurred that the viscosity of syrup significantly increases to make it extremely difficult to apply it on the substrate by coating or casting.

In addition, in the automobile industry, there is a case in which a transparent pressure-sensitive adhesive tape is applied for the purpose of preventing damage on the painted surface of car body, and a polyurethane substrate is used as the substrate of this transparent pressure-sensitive adhesive tape (e.g., see JP-A-59-41376 (Patent Document 3) and JP-A-2005-272558 (Patent Document 4)).

However, it is known that polyurethane forms a colored substance which shows a conjugate structure and a colored substance that contains nitrogen by an optical reaction. Accordingly, a film which contains polyurethane is colorless and transparent in the initial stage, but when it is left in the open, there will be a case in which its fine appearance is lowered by changing into yellow due to its exposure to ultraviolet rays and also by causing disappearance of its glossiness.

Patent Document 1: JP-T-2001-520127
Patent Document 2: JP-A-2003-96140
Patent Document 3: JP-A-59-41376
Patent Document 4: JP-A-2005-272558
Patent Document 5: JP-A-10-158335

Non-patent Document 1: Encyclopedia of Polymer Science and Engineering Vol. 8, John Wiley & Sons, New York (1984) P. 279
Non-patent Document 2: L.H. Sperling, "Interpenetrating Polymer Networks and Related Materials", Plenum Press, New York (1981)

JP-2009/299053 relates to an adhesive sheet for protecting coating films comprising a base layer and an adhesive layer, wherein the base layer has a coating layer produced by using a fluoroethylene vinyl ether alternating copolymer on one surface of a composite film containing an acrylic-based polymer and a urethane polymer.

US-A-5965256 discloses a multilayered film comprising an interpenetrating polymer network layer and at least one fluoro-containing polymer layer, wherein the film is disposed on a substrate.

GB-A-2081727 discloses a curable fluorocopolymer which comprises 40 to 60 mol% of fluoroolefin units, 5 to 45 mol% of cyclohexyl vinyl ether units, 5 to 45 mol% of alkyl vinyl ether units and 3 to 15 mol% of hydroxyalkyl vinyl ether units and has an inherent viscosity of 0.05 to 2.0 dl/g in tetrahydrofuran at 30°C.

### SUMMARY OF THE INVENTION

The invention has been made in order to solve the above-mentioned problems, and the invention aims at providing a multilayer sheet which unites film durabilities such as antifouling property, weather resistance, heat resistance, chemical resistance, transparency and the like.

Accordingly, a multilayer sheet of the invention comprises a substrate layer and a coat layer arranged on both sides of the substrate layer, wherein the substrate layer comprises a film including a urethane polymer, wherein the coat layer comprises an isocyanate crosslinking agent and fluoroethylene vinyl ether alternating copolymer represented by the following formula: 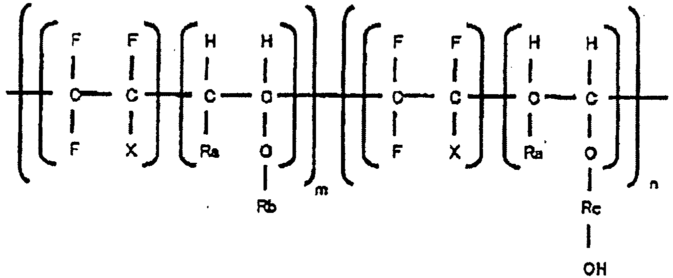
in which X represents fluorine, chlorine or bromine, Ra represents hydrogen or a C1-C 10 alkyl group, Rb represents a C1-C16 alkyl group, Rc represents a C1-C16 alkylene group, each of m and n is an integral number, and a weight average molecular weight as determined in the description of the fluoroethylene vinyl ether alternating copolymer is selected within the range of from 1,000 to 2,000,000
wherein the coat layer and the film form a bridge structure obtained through the binding of a coat layer-constituting component with a film-constituting component.

The present invention also provides a method of producing the above multilayer sheet of the present invention, wherein the film is formed using a coating liquid for film formation which is prepared by adding a photopolymerization initiator to a solution containing an acrylic monomer and a urethane polymer, said solution being obtained by reacting a diol with a diisocyanate in the acrylic monomer as a solvent to form the urethane polymer.

Preferred embodiments are set forth in the subclaims.

According to the invention, a multilayer sheet which unites all of the antifouling property, weather resistance, heat resistance, chemical resistance and transparency can be realized.

### DETAILED DESCRIPTION OF THE INVENTION

The following describes the invention in detail.

The multilayer sheet of the invention has a specified coat layer on both sides of the substrate layer. This substrate layer is a film including at least a urethane polymer and consists of a film of the urethane polymer alone or of a composite film further comprising other polymer.

It is preferable that this film includes a (meth)acrylic polymer and a urethane polymer. Mixing ratio of the (meth)acrylic polymer and the urethane polymer in this film is, for example, preferably 0.25 or more and 4.00 or less, further preferably 0.429 or more and 2.333 or less, particularly preferably 0.538 or more and 1.857 or less, in terms of acrylic component/urethane component weight ratio. When the acrylic component/urethane component is less than 0.25, viscosity of the precursor mixture (syrup) becomes high so that there will be a case in which the workability worsens and there will be a case in which sheet formation in the subsequent sheet forming step becomes difficult to attain. Also, when the acrylic component/urethane component exceeds 4.00, ratio of the urethane polymer in the film becomes less than 25%, so that there will be a case in which tensile breaking strength lowers and becomes unbearable for practical use.

According to the invention, it is preferable that the (meth)acrylic polymer is prepared using acrylic components containing at least an (meth)acrylic monomer and a monofunctional (meth)acrylic monomer. As the monofunctional (meth)acrylic monomer, there may be mentioned a monofunctional (meth)acrylic monomer in which glass transition temperature (Tg) of its homopolymer is 0°C or more and a monofunctional (meth)acrylic monomer in which glass transition temperature (Tg) of its homopolymer is less than 0°C. These acrylic components can be used alone or in combination thereof. According to the invention, for example, it is preferable to use an acrylic monomer and a monofunctional (meth)acrylic monomer in which glass transition temperature (Tg) of its homopolymer is 0°C or more, and it is preferable to use an acrylic component which further contains a monofunctional (meth)acrylic monomer in which glass transition temperature (Tg) of its homopolymer is less than 0°C.

According to the invention, the (meth)acrylic monomer is a (meth)acrylic monomer having carboxyl group, and for example, acrylic acid, methacrylic acid and the like can be mentioned. According to the invention, acrylic acid is particularly preferable, but it may be methacrylic acid or a mixture of acrylic acid and methacrylic acid, or other monomer having an acidic group may be mixed. As the other monomer having an acidic group, for example, there may be mentioned a carboxyl group-containing monomer such as carboxymethyl (meth)acrylate, carboxypentyl (meth)acrylate, itaconic acid, maleic acid, fumaric acid, crotonic acid, isocrotonic acid, acrylic acid, methacrylic acid and the like, a sulfonate group-containing monomer such as 2-acrylamido-2-methylpropane sulfonate and the like, a phosphate group-containing monomer such as 2-hydroxyethylacryloyl phosphate, 2-hydroxypropylacryloyl phosphate and the like, and the like.

The amount of the (meth)acrylic monomer is 1% by weight or more and 40% by weight or less, preferably 2% by weight or more and 10% by weight or less, based on the film precursor which is described later. When the amount of the (meth)acrylic monomer is less than 1% by weight, a prolonged period of time is required for the reaction, it is extremely difficult to carry out film formation and there will be a case of causing a problem of insufficient film strength. When the amount of the (meth)acrylic monomer exceeds 40% by weight, water absorption of the film becomes large so that there will be a case of causing a problem on the water resistance. According to the invention, the (meth)acrylic monomer is an essential composing element having an extremely important function because it greatly exerts influence upon the compatibility of the urethane component with the acrylic component.

In this connection, when referred to "film" in the invention, it includes a sheet, and when referred to "sheet", it is a general idea which includes a film. Also, when expressed as "(meth)acrylic" in the invention like the case of (meth)acrylic polymer or (meth)acrylic monomer, it is a general idea of generally naming methacrylic and acrylic. In addition, when expressed as "acrylic", it is also a general idea of including methacrylic with the proviso that there is no problem in view of general common sense.

According to the invention, as the monofunctional (meth)acrylic monomer in which Tg of its homopolymer is 0°C or more and the monofunctional (meth)acrylic monomer in which Tg of its homopolymer is less than 0°C, there may be mentioned methyl (meth)acrylate, ethyl (meth)acrylate, n-propyl (meth)acrylate, isopropyl (meth)acrylate, n-butyl (meth)acrylate, isobutyl (meth)acrylate, see-butyl (meth)acrylate, t-butyl (meth)acrylate, pentyl (meth)acrylate, isopentyl (meth)acrylate, hexyl (meth)acrylate, cyclobexyl (meth)acrylate, heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylale, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, isobornyl (meth)acrylate, 1-adamantyl (meth)acrylate and the like. These monofunctional (meth)acrylic monomers can be used alone or in combination with two or more species.

According to the invention, it is preferable to use at least one selected from the group consisting of acryloyl morpholine, isobornyl acrylate and dicyclopentenyl acrylate, as the monofunctional (meth)acrylic monomer in which Tg of its homopolymer is 0°C or more, and it is particularly preferable to use isobornyl acrylate. Also, it is particularly preferable to use n-butyl acrylate as the monofunctional (meth)acrylic monomer in which Tg of its homopolymer is less than 0°C.

The amount of the monofunctional (meth)acrylic monomer in which Tg of its homopolymer is 0°C or more is preferably from 20% by weight to 99% by weight, further preferably from 30% by weight to 98% by weight, based on the acrylic component. When the amount of this monofunctional (meth)acrylic monomer is less than 20% by weight, there may be a case of causing a problem of insufficient film strength, and when it exceeds 99% by weight, there may be a case in which the film becomes brittle due to its too high rigidity.

The monofunctional (meth)acrylic monomer in which Tg of its homopolymer is less than 0°C may not be contained (its containing amount is 0% by weight), but when it is contained, its containing amount is preferably larger than 0% by weight and 50% by weight or less, further preferably larger than 0% by weight and 45% by weight or less, based on the acrylic component. When the containing amount of this monofunctional (meth)acrylic monomer exceeds 50% by weight, there may be a case of causing a problem of insufficient film strength.

Kind, combination, using amount and the like of the (meth)acrylic monomer are decided accordingly by taking into consideration its compatibility with urethane, polymerization ability at the time of photo-curing with a radioactive ray and characteristics of the obtained polymer.

According to the invention, the following monomers may be added together with the above-mentioned (meth)acrylic monomer. As such monomers, for example, there may be mentioned a hydroxyl group-containing monomer such as 2-hydroxyethyl (meth)acrylate, 3-hydroxypropyl (meth)acrylate, 4-hydroxypropyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)-methyl acrylate and the like; a glycidyl group-containing monomer such as glycidyl (meth)acrylate, methylglycidyl (meth)acrylate and the like; a cyanoacrylate monomer such as acrylonitrile, methacrylonitrile and the like; a nitrogen-containing monomer such as N,N-dimethylaminoethyl (meth)acrylate, N,N-dimethylaminopropyl (meth)acrylamide, N,N-dimethyl (meth)acrylamide, N,N-diethyl (meth)acrylamide, N-isopropyl (meth)acrylamide, N-hydroxyethyl (meth)acrylamide, (meth)acryloyl morpholine, N-vinyl-2-piperidone, N-vinyl-3-morpholinone, N-vinyl-2-caprolactam, N-vinyl-2-pyrrolidone, N,vinyl-1,3-oxazin-2-one, N-vinyl-3,5-morpholinedione, N-cyclohexylmaleimide, N-acryloylpyrrolidine, t-butyl amino ethyl (meth)acrylate and the like, vinyl acetate, styrene and the like.

In addition, other polyfunctional monomers can be added within such a range that the characteristics are not spoiled. As the polyfunctional monomers, for example, there may be mentioned 1,4-butanediol diacrylate, 1,4-butanediol dimethacrylate, 1,6-hexanediol diacrylate, 1,9-nonanediol diacrylate, 2-n-butyl-2-ethyl-1,3-propanediol diacrylate, tripropylene diol diacrylate, tetraethylenediol diacrylate, neopentyldiol diacrylate, neopentyldiol dimethacrylate, trimethylolpropane triacrylate, pentaerythritol triacrylate, tris(2-acryloyloxyethyl) isocyanurate, pentaerythritol tetraacrylate and the like.

The polyfunctional monomer can be contained in an amount of 1 part by weight or more and 20 parts by weight or less based on 100 parts by weight of the acrylic monomer. When containing amount of the polyfunctional monomer is 1 part by weight or more, cohesive force of the film of the invention is sufficient, and when it is 20 parts by weight or less, the elastic modulus does not become too high and can follow irregularity of the adherend surface.

The urethane polymer is obtained by allowing a diol and a diisocyanate to undergo the reaction. A catalyst is generally used in the reaction of the hydroxyl group of diol with the diisocyanate, but according to the invention, the reaction can be accelerated without using dibutyl tin dilaurate, tin octenoate and the like catalysts which cause environmental load.

As the diol to be used in the invention, for example, there may be mentioned ethylenediol, 1,4-butylenediol, 1,6-hexanediol, 1,12-dodecanediol, neopentyldiol, 3-methyl-1,5-pentanediol, diethylenediol, poly(oxypropylene)diol, poly(oxytetramethylene)diol, aliphatic polyester polyol (condensation product of an aliphatic diol with an aliphatic dibasic acid; e.g., ethylenediol, 1,4-butylenediol, 1,6-hexanediol, neopentyldiol, 3-methyl-1,5-pentanediol or diethylenediol as the aliphatic diol and succinic acid, adipic acid, sebacic acid or decamethylenedicarboxylic acid as the aliphatic dibasic acid), polycaprolactone polyol, poly carbonate polyol (an addition product of an aliphatic diol and ethylene carbonate, a condensation product of an aliphatic diol and dimethyl carbonate or a condensation product of an aliphatic diol and diethyl carbonate; e.g., ethylenediol, 1,4-butylenediol, 1,6-hexanediol, neopentyldiol, 3-methyl-1,5-pentanediol or diethylenediol as the aliphatic diol) and the like high molecular weight diols and low molecular weight diols and the like. One or two or more of these diols are used. According to the invention, it is preferable to use poly(oxytetramethylene)diol (PTMG).

As the acrylic polyol, in addition to the copolymers of monomers having hydroxyl group, a copolymer of a hydroxyl group-containing substance with an acrylic monomer, and the like can be mentioned. As the epoxy polyol, there are an amine-modified epoxy resin and the like.

According to the invention, the urethane polymer does not contain a crosslinking structure. It is preferable that the diol to be used in the formation of urethane polymer is a filamentous (linear) diol. However, as long as it satisfies the condition that a crosslinking structure is not formed in the urethane polymer, the diol may be a side chain diol or a branch structure-containing diol. That is, the urethane polymer which constitutes the film of the invention does not contain a crosslinking structuxe and therefore is completely different structurally from the IPN structure.

According to the invention, the above-mentioned diols can be used alone or in combination thereof, by taking the solubility in acrylic monomers, reactivity with isocyanate and the like into consideration. When strength is required, it is effective to increase amount of urethane hard segments by a low molecular weight diol. When elongation is important, it is preferable to use a diol having large molecular weight, alone. In addition, the polyether polyol is generally inexpensive and has good water resistance and the polyester polyol has high strength. According to the invention, kind and amount of the polyol can be freely selected according to the purpose, and kind, molecular weight and using amount of the polyol can be selected accordingly also from the viewpoint of the characteristics of the substrate to be coated and the like, reactivity with the isocyanate, compatibility with acrylic matters and the like.

As the diisocyanate to be used in the invention, aromatic, aliphatic and alicyclic diisocyanates and dimers, trimers and the like of these diisocyanates can be mentioned. As the aromatic, aliphatic and alicyclic diisocyanates, there may be mentioned for example tolylene diisocyanate (TDI), diphenylmethane diisocyanate (MDI), xylylene diisocyanate (XDI), naphthylene diisocyanate (NDI), phenylene diisocyanate (PPDI), m-tetramethylxylylene diisocyanate (TMXDI), methylcyclohexane diisocyanate (hydrogenated TDI), dicyclohexylmethane diisocyanate (hydrogenated MDI), cyclohexane diisocyanate (hydrogenated PPDI), bis(isocyanatomethyl)cyclohexane (hydrogenated XDI), norbomane diisocyanate (NBDI), isophorone diisocyanate (IPDI), hexamethylene diisocyanate (HDI), butane diisocyanate, 2,4-dimethylhexamethylene diisocyanate, 2,4,4-trimethylhexamethylene diisocyanate, ethylene diisocyanate, tetramethylene diisocyanate and the like. In addition, dimers and tetramers thereof and polyphenylmethane diisocyanate are used. As the trimers, isocyanurate type, buret type, allophanate type and the like can be mentioned and arbitrarily used.

This is because when a benzene ring-containing aromatic diisocyanate is used, a colored substance having a conjugate structure is apt to be formed by a photoreaction, which is not preferable, and according to the invention, a hardly yellowing or non-yellowing type aliphatic or alicyclic diisocyanate which does not contain benzene ring is suitably used.

These diisocyanates can be used alone or in combination thereof. Kind, combination and the like of diisocyanate may be arbitrarily selected from the viewpoint of the characteristics of the support, coat layer and the like to which the film is employed (applied), solubility in acrylic monomers, reactivity with hydroxyl group and the like.

According to the invention, it is preferable that the urethane polymer is formed using at least one kind of diisocyanate selected from the group consisting of hexamethylene diisocyanate (HDI), hydrogenated tolylene diisocyanate (HTDI), hydrogenated 4,4-diphenylmethane diisocyanate (HMDI), isophorone diisocyanate (IPDI) and hydrogenated xylylene diisocyanate (HXDI), of which hydrogenated xylylene diisocyanate is particularly preferable.

Regarding the amounts of the diol component and diisocyanate component to be used for forming the urethane polymer in the invention, the NCO/OH (equivalent Ratio) is preferably 1.1 or more and 2.0 or less, further preferably 1.12 or more and 1.60 or less, particularly preferably 1.15 or more and 1.40 or less. When the NCO/OH (equivalent ratio) is less than 1.1, molecular weight of the urethane polymer becomes so large that viscosity of the film precursor (syrup solution) becomes large and there will be a case in which working becomes difficult to carry out in the subsequent sheet forming step. Also, when the NCO/OH (equivalent ratio) exceeds 2.0, molecular weight of the urethane polymer becomes so small that the breaking strength is apt to lower.

According to the invention, ratio of the acrylic component and urethane component which form the film is 0.25 or more and 4.00 or less, preferably 0.429 or more and 2.333 or less, particularly preferably 0.538 or more and 1.857 or less, in terms of the acrylic component/urethane component weight ratio. When the acrylic component/urethane component weight ratio is less than 0.25, viscosity of the syrup solution becomes so large that there will be a case in which working becomes difficult to carry out in the subsequent sheet forming step. Also, when the acrylic component/urethane component weight ratio exceeds 4.00, the amount of urethane polymer in the film becomes less than 25% so that there will be a case in which tensile breaking strength is lowered and cannot endure practical use.

A hydroxyl group-containing acrylic monomer may be added to the above-mentioned urethane polymer. By adding a hydroxyl group-containing acrylic monomer, (meth)acryloyl group can be introduced into the molecular terminus of urethane prepolymer, so that copolymerization property with the (meth)acrylic monomer is granted, compatibility of the urethane component with the acrylic component is increased and improvement of the S-S characteristics such as breaking strength can also be made. As the hydroxyl group-containing acrylic monomer to be used herein, hydroxyethyl (meth)acrylate, hydroxypropyl (meth)acrylate, hydroxybutyl (meth)acrylate, hydroxyhexyl (meth)acrylate and the like are used. Using amount of the hydroxyl group-containing acrylic monomer is preferably from 0.1 part by weight to 10 parts by weight, further preferably from 1 part by weight to 5 parts by weight, based on 100 parts by weight of the urethane polymer.

As occasion demands, generally used additive agents such as an ultraviolet ray absorbent, an aging inhibitor, a filler, a pigment, a coloring agent, a flame retardant, an antistatic agent, a light stabilizer and the like can be added to the film within such a range that the effect of the invention is not spoiled. These additive agents are used in usual amounts in response to their kinds. These additive agents may be added in advance before the polymerization reaction of the diisocyanate with the diol or may be added before respectively polymerizing the urethane polymer and (meth)acrylic monomer.

Regarding the ultraviolet ray absorbent (UVA) to be used in the invention, for example as a benzotriazole ultraviolet ray absorbent, there may be mentioned 2-(2-hydroxy-5-tert-butylphenyl)-2H-benzotriazole (e.g., "TINUVIN PS" mfd. by Ciba Japan), an esterification product of benzenepropanoic aid with 3-(2H-benzotriazol-2-yl)5-(1,1-dimethylethyl)-4-hydroxy(C₇-C₉ side chain and straight chain alkyl) (e.g., "TINUVIN 384-2" mfd. by Ciba Japan), a mixture of octyl-3-[3-tert-butyl-4-hydroxy-5-(5-chloro-2H-benzotriazol-2-yl)phenyl] propionate with 2-ethylhexyl-3-[3-tert-butyl-4-hydroxy-5-(5-chloro-2H-benzotriazol-2-yl)phenyl] propionate (e.g., "TINUVIN 109" mfd. by Ciba Japan), 2-(2H-benzotriazol-2-yl)-4,4-bis(1-methyl-1-phenylethyl)phenol (e.g., "TINUVIN 900" mfd. by Ciba Japan), 2-(2H-benzotriazol-2-yl)-6-(1-methyl-1-phenylethyl)-4-(1,1,3,3-tetramethylbutyl)phenol (e.g., "TINUVIN 928" mfd. by Ciba Japan), a reaction product of methyl-3-(3-(2H-benzotriazol-2-yl)-5-tert-butyl-4-hydroxyphenyl) propionate/polyethylene glycol 300 (e.g., "TINUVIN 1130" mfd. by Ciba Japan), 2-(2H-benzotriazol-e-yl)-p-cresol (e.g., "TINUVIN P" mfd. by Ciba Japan), 2-[5-chloro(2H)-benzotriazol-2-yl]-4-methyl-6-(tert-butyl)phenol (e.g., "TINUVIN 326" mfd, by Ciba Japan), 2-(2H-benzotriazol-2-yl)-4,6-di-tert-pentylphenol (e.g., "TINUVIN 328" mfd. by Ciba Japan), 2-(2H-benzotriazol-2-yl)-4-(1,1,3,3, tetramethylbutyl)phenol (e.g., "TINUVIN 329" mfd. by Ciba Japan), 2-2'-methylenebis[6-(2H-benzotriazol-2-yl)-4-(1,1,3,3-tetramethylbutyl)phenol] (e.g., "TINUVIN 360" mfd. by Ciba Japan), a reaction product of methyl-3-(3-(2H-benzotriazol-2-yl)5-tert-butyl-4-hydroxyphenyl) propionate with polyethylene glycol 300 (e.g., "TINUVIN 313" mfd. by Ciba Japan), 2-(2H-benzotriazol-2-yl)-6-dodecyl-4-methylphenol (e.g., "TINUVIN 571" mfd. by Ciba Japan), 2-[2-hydroxy-3-(3,4,5,6-tetrahydro phthalimido-methyl)-5-methylphenyl]benzotriazol (e.g., "Sumisorb 250" mfd. by SUMITOMO CHEMICAL CO., LTD.), 2,2'-methylenebis[6-(benzotriazol-2-yl)-4-tert-octylphenol] (e.g., "ADKSTAB LA31" mfd. by ADEKA) and the like.

Also, as a hydroxyphenyltriazine ultraviolet ray absorbent, for example, there may be mentioned a reaction product of 2-(4,6-bis(2,4-dimethylphenyl)-1,3,5-triazin-2-yl)-5-hydroxyphenyl with [(C10 to C16, mainly C12 or C13 alkyloxy)methyl]oxirane (e.g., "TINUVIN 400" mfd, by Ciba Japan), a reaction product of 2-(2,4-dihydroxyphenyl)-4,6-bis(2,4-dimethylphenyl)-1,3,5-triazine with (2-ethylhexyl)-glycidic acid ester (e.g., "TINUVIN 405" mfd. by Ciba Japan), 2,4-bis[2-hydroxy-4-butoxyphenyl]-6-(2,4-dibutoxyphenyl)-1,3,5-triazine (e.g., "TINUVIN 460" mfd. by Ciba Japan), 2-(4,6,diphenyl-1,3,5-triazin-2-yl)-5-[(hexyl)oxy]-phenol (e.g., "TINUVIN 1577" mfd. by Ciba Japan), 2-(hydroxy-4-[1-octyloxycarbonylethoxy]phenyl)-4,6-bis(4-phenylphenyl)-1,3,5-triazine (e.g., "TINUVIN 479" mfd. by Ciba Japan) and the like.

As a benzophenone ultraviolet ray absorbent, for example, there may be mentioned "CHIMASSORB 81" mfd. by Ciba Japan and the like. In addition, as a benzoate ultraviolet ray absorbent, for example, there may be mentioned 2,4-di-tert-butylphenyl-3,5-di-tert-butyl-4-hydroxy benzoate (e.g., "TINUVIN 120" mfd. by Ciba Japan) and the like.

According to the invention, the above-mentioned ultraviolet ray absorbents can be used alone or as a combination thereof.

Total using amount of the ultraviolet ray absorbent is preferably 0.1% by weight or more and 4.0% by weight or less, further preferably 0.5% by weight or more and 2.0% by weight or less, based on 100% by weight of the film precursor. When containing amount of the ultraviolet ray absorbent is 0.1% by weight or more, absorption of the ultraviolet rays which cause deterioration and coloring is sufficient, and when it is 4.0% by weight or less, coloring by the ultraviolet ray absorbent itself does not occur.

It is preferable that the light stabilizer to be used in the invention is a hindered amine light stabilizer (HALS). As the hindered amine light stabilizer to be used in the invention, for example, there may be mentioned a polymer of dimethyl succinate with 4-hydroxy-2,2,6,6-tetramethyl-1-piperidine ethanol (e.g., "TINUVIN 622" mfd. by Ciba Japan), a 1:1 reaction product of the polymer of dimethyl succinate with 4-hydroxy-2,2,6,6,-tetramethyl-1-piperidine ethanol and N,N',N",N"'-tetrakis-(4,6-bis-(butyl-(N-methyl-2,2,6,6-tetramethylpiperidin-4-yl)amino)-triazin-2-yl)-4,7-diazadecane-1,10-diamine (e.g., "TINUVIN 119" mfd. by Ciba Japan), a condensation polymerization product of dibutylamine-1,3-triazine-N,N'-bis(2,2,6,6-tetramethyl-4-piperidyl-1,6-hexamethylenediamine and N-(2,2,6,6-tetramethyl-4-piperidyl)butylamine (e.g., "TINUVIN 2020" mfd. by Ciba Japan), poly[{6-{1,1,3,3-tetramethylbutyl)amino-1,3,5-triazine-2,4-diyl}{2,2,6,6-tetramethyl-4-piperidyl}imino]hexamethylene{(2,2,6,6-tetramethyl-4-piperidyl)imino})(e.g., "TINUVIN 944" mfd. by Ciba Japan), a mixture of bis(1,2,2,6,6-pentamethyl-4-piperidyl)sebacate with methyl 1,2,2,6,6-pentamethyl-4-piperidylsebacate (e.g., "TINUVIN 7651" mfd. by Ciba Japan), bis(2,2,6,6-tetramethyl-4-piperidyl) sebacate (e.g., "TINUVIN 770" mfd. by Ciba Japan), a reaction product of decane diacid bis(2,2,6,6-tetramethyl-1-(octyloxy)-4-piperidinyl) ester (1,1-dimethylethylhydroperoxide) with octane (e.g., "TINUVIN 123" mfd. by Ciba Japan), bis(1,2,2,6,6-pentamethyl-4-piperidyl)[[3,5-bis(1,1-dimethylethyl)-4-hydroxyphenyl]methyl]butyl malonate (e.g., "TINUVIN 144" mfd. by Ciba Japan), a reaction product of a reaction product of cyclohexane with N-butyl-2,2,6,6-tetramethyl-4-piperidineamine-2,4,6-trichloro-1,3,5-triazine peroxide with 2-aminoethanol (e.g., "TINUVIN 152" mfd. by Ciba Japan), a mixture of bis(1,2,2,6,6-pentamethyl-4-piperidyl) sebacate with methyl-1,2,2,6,6-pentamethyl-4-piperidyl sebacate (e.g., "TINUVIN 292" mfd. by Ciba Japan) and the like.

According to the invention, the above-mentioned hindered amine light stabilizers can be used alone or as a combination of two or more kinds, and the total using amount of these hindered amine light stabilizers is preferably 0.1 % by weight or more and 4.0% by weight or less, further preferably 0.5% by weight or more and 2.0% by weight or less, based on 100% by weight of the film precursor. When using amount of the hindered amine light stabilizer is 0.1% by weight or more, the deterioration preventing function is sufficiently expressed, and when it is 4.0% by weight or less, the coloring by the light stabilizer itself is not induced.

According to the invention, a small amount of a solvent may be added for the purpose of adjusting coating viscosity. As the solvent, it can be arbitrarily selected from generally used solvents, but for example, ethyl acetate, toluene, chloroform, dimethylformamide and the like can be mentioned.

The film of the invention can be formed by, for example, using an acrylic monomer as a diluent, forming a urethane polymer by carrying out reaction of a diol with a diisocyanate in this acrylic monomer, coating a mixture containing the acrylic monomer and urethane polymer as the main components on a support (release treated according to the necessity) or on the coat layer or the like which is described later, carrying out curing by irradiating ionizing radial rays such as α rays, β rays, γ rays, neutron rays and electron rays, radial rays such as ultraviolet rays, visible light or the like, and then releasing and removing the support or the like as occasion demands. The multilayer sheet of the invention can be obtained in a shape in which a film is laminated on a coat layer in this manner. In this connection, the reaction conditions for forming a mixture of an acrylic monomer and a urethane polymer can be arbitrarily set, but for example, the water bath temperature is 20°C or more and 90°C or less, preferably from 40°C or more and 80°C or less, and further preferably 50°C or more and 75°C or less, and the reaction time is 1 hour or more and 48 hours or less, preferably 3 hours or more and 24 hours or less and further preferably 5 hours or more and 15 hours or less.

Specifically, the film can be obtained by dissolving a diol in an acrylic monomer, carrying out viscosity adjustment by adding a diisocyanate or the like thereto and allowing it to react with the diol, coating this on a coat layer or the like or, as occasion demands, on the release-treated surface of the support or the like, and then curing the product using a low pressure mercury lamp or the like. In this method, the acrylic monomer may be added in one portion, or by dividing it into several times, during the urethane synthesis. Alternatively, the diisocyanate may be dissolved in the acrylic monomer and then allowed to react with the diol. According to this method, molecular weight is not limited and a high molecular weight polyurethane can be formed too, so that molecular weight of the finally obtained urethane can be designed to an optional size.

In this case, in order to avoid inhibition of the polymerization by oxygen, oxygen may be blocked by putting a release-treated sheet (separator or the like) on the mixture coated on a support or the like, or the oxygen concentration may be lowered by putting the base materials into a container filled with an inert gas.

According to the invention, kinds of radial rays and the like and kinds of the lamp to be used in the irradiation, and the like can be arbitrarily selected, and a fluorescent chemical lamp, a black light, a germicidal lamp and the like low pressure lamps, a metal halide lamp, a high pressure mercury lamp and the like high pressure lamps, and the like can be used.

The irradiation amount of ultraviolet rays and the like can be arbitrarily set according to the characteristics of the required film. In general, the irradiation amount of ultraviolet rays is from 100 mJ/cm² to 5,000 mJ/cm², preferably from 1,000 mJ/cm² to 4,000 mJ/cm², further preferably from 2,000 mJ/cm² to 3,000 ml/cm². When the irradiation amount of ultraviolet rays is smaller than 100 mJ/cm², there will be a case in which sufficient conversion cannot be obtained, and when it is larger than 5,000 mJ/cm², there will be a case of causing deterioration.

In addition, the temperature at the time of irradiating ultraviolet rays and the like is not particularly limited and can be arbitrarily set, but when the temperature is too high, a termination reaction by the heat of polymerization is apt to occur which is apt to become a cause of the characteristics lowering, so that it is generally 70°C or less, preferably 50°C or less and further preferably 30°C or less.

A photopolymerization initiator is contained in the mixture containing a urethane polymer and an acrylic monomer as the main components. For example, a ketal photopolymerization initiator, an α-hydroxyketone photopolymerization initiator, an α-aminoketone photopolymerization initiator, an acylphosphine oxide photopolymerization initiator, a benzophenone photopolymerization initiator, a thioxanthone photopolymerization initiator, a benzoin ether photopolymerization initiator, an acetophenone photopolymerization initiator, an aromatic sulfonyl chloride photopolymerization initiator, an optically active oxime photopolymerization initiator, a benzoin photopolymerization initiator, a benzyl photopolymerization initiator and the like can be used.

As the ketal photopolymerization initiator, for example, 2,2-dimethoxy-1,2-diphenylethan-1-one (e.g., "lRGACURE 651" and the like, mfd. by Ciba Specialty Chemicals) and the like can be mentioned.

As the α-hydroxyketone photopolymerization initiator, for example, 1-hydroxycyclohexyl phenyl ketone (e.g., "IRGACURE 184" and the like, mfd. by Ciba Japan), 2-hydroxy-2-methyl-1-phenylpropan-1-one (e.g., "DAROCURE 1173" and the like, mfd. by Ciba Japan), 1-[4-(2-hydroxyethoxy)-phenyl]-2-hydroxy-2-methyl-1-propan-1-one (e.g., "IRGACURE 2959" and the like, mfd. by Ciba Japan) and the like can be mentioned.

As the α-aminoketone photopolymerization initiator, for example, 2-methyl-1-[4-(methylthio)phenyl]-2-morpholinopropan-1-on (e.g., "IRGACURE 907" and the like, mfd. by Ciba Japan), 2-benzyl-2-dimethylamino-1-(morpholinophenyl)-butanone-1 (e.g., "IRGACURE 369" and the like, mfd. by Ciba Japan) and the like can be mentioned.

As the acylphosphine oxide photopolymerization initiator, for example, 2,4,6-trimethylbenzoyldiphenylphosphine oxide (e.g., "LUCIRIN TPO" and the like, mfd. by BASF) and the like can be mentioned.

As the benzoin ether photopolymerization initiator, for example, benzoin methyl ether, benzoin ethyl ether, benzoin propyl ether, benzoin isopropyl ether, benzoin isobutyl ether, 2,2-dimethoxy-1,2-diphenylethan-1-one, anisoin methyl ether and the like can be mentioned.

As the acetophenone photopolymerization initiator, for example, 2,2-diethoxyacetophenone, 2,2-dimethoxy-2-phenolacetophenone, 1-hydroxycyclohexyl phenyl ketone, 4-phenoxydichloroacetophenone, 4-(t-butyl)dichloroacetophenone and the like can be mentioned.

As the aromatic sulfonyl chloride photopolymerization initiator, for example, 2-naphthalenesulfonyl chloride and the like can be mentioned and as the optically active oxime photopolymerization initiator, for example, 1-phenyl-1,1-propanedione-2-(o-ethoxycarbonyl)-oxime and the like can be mentioned.

As the benzoin photopolymerization initiator, for example, benzoin and the like can be mentioned, and as the benzyl photopolymerization initiator, for example, benzil and the like can be mentioned.

A the benzophenone photopolymerization initiator, for example, benzophenone, benzoyl benzoate, 3,3'-dimethyl-4-methoxybenzophenone, polyvinylbenzophenone, α-hydroxycyclohexyl phenyl ketone and the like can be mentioned.

As the thioxanthone photopolymerization initiator, for example, thioxanthone, 2-chlorothioxanthone, 2-methylthioxanthone, 2,4-dimethylthioxanthone, isopropylthioxanthone, 2,4-diisopropylthioxanthone, dodecylthioxanthone and the like can be mentioned.

According to the purpose and the like, thickness of the substrate layer of the invention can be arbitrarily selected in response for example to the kind, position and the like of the object to be coated and protected and therefore is not particularly limited, but is preferably 50 µm or more, further preferably 100 µm or more and particularly preferably 150 µm or more. Also, upper limit value of the thickness is preferably about 1 mm, further preferably 500 µm or less and particularly preferably 400 µm or less.

The multilayer sheet of the invention has a coat layer on both sides of the substrate layer (film). The coat layer includes a fluoroethylene vinyl ether alternating polymer represented by the following formula.

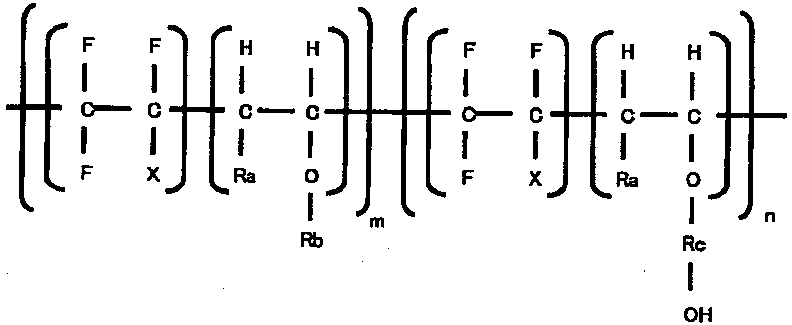

In the formula, X represents fluorine, chlorine or bromine, Ra represents hydrogen or a C1-C10 alkyl group, Rb represents a C1-C16 alkyl group, Rc represents a C1-C16 alkylene group, each of m and n is an integral number, and weight average molecular weight of the fluoroethylene vinyl ether alternating copolymer is selected within the range of from 1,000 to 2,000,000.

Weight average molecular weight of the fluoroethylene vinyl ether alternating copolymer is from 1,000 to 2,000,000, preferably from 5,000 to 1,000,000, and further preferably from 10,000 to 500,000. According to the invention, the m and n in the above-mentioned formula are selected in such a manner that weight the average molecular weight of the fluoroethylene vinyl ether alternating copolymer becomes a range of from 1,000 to 2,000,000.

The weight average molecular weight of the fluoroethylene vinyl ether alternating copolymer can be measured by a GPC method. Measuring method of the GPC method is shown below. That is, the fluoroethylene vinyl ether alternating copolymer is adjusted to 2.0 g/l using THF solution and then allowed to stand still for 12 hours. Thereafter, this solution is filtered through a 0.45 µm membrane filter, and the filtrate is subjected to a GPC measurement under the following measuring conditions using "HLC-8120GPC" manufactured by TOSOH CORP. as the analyzer.

### Measuring conditions:

| | |
|---|---|
| Column | TSK gel GMH-H (S) x 2 |
| Column size | 7.8 mm I.D. x 300 mm |
| Eluent | THF |
| Flow rate | 0.5 mL/mm |
| Detector | RI |
| Column temperature | 40°C |
| Injection | 100 µl |

Thickness of the coat layer is preferably from 2 µm to 50 µm, more preferably from 5µm to 40 µm, and further preferably from 8 µm to 30 µm. When thickness of the coat layer is less than 2 µm, defective regions such as pin holes where the coat layer is not formed are apt to generate and there may be a case in which characteristics of the coat layer cannot be fully exerted. Also, when it exceeds 50 µm, there may be a case in which physical properties of the coat layer cause lowering of physical properties of the film.

According to the invention, the coat layer has a bridging point by bridged with the film. The structure having a bridging point is obtained by forming a bridging point through the binding of a coat layer-constituting component with a composite film-constituting component. For example, when a residual isocyanate group is present in the isocyanate used for the formation of the coat layer, this residual isocyanate group can form a bridging point by reacting with a hydroxyl group of the urethane polymer-acrylic monomer mixture. Alternatively, when a hydroxyl group of the fluoroethylene vinyl ether alternating copolymer to be used in the formation of coat layer is remained, a bridging point can be formed by reacting with the isocyanate group remained in the coating liquid for film. Thus, according to the invention, it is necessary that a residual isocyanate group or a residual hydroxyl group is present in the coat layer under a reactive state at the time of coating the coating liquid for film use. In addition, it is preferable that the coating liquid for film is coated before completely finishing bridging reaction of the coat layer.

When the coat layer and the film forms a bridge structure in this manner, excellent adhesive property can be exerted so that the coat layer can maintain the excellent adhesive property for the film for a prolonged period of time. Accordingly, even when an application sheet is applied for example for the purpose of positioning a pressure-sensitive adhesive sheet for coating film protection, the coat layer is not peeled off when the application sheet is peeled off.

In order to effect formation of a bridge structure by the coat layer and the film, it is necessary that the coat layer is prepared using a fluoroethylene vinyl ether alternating copolymer, and it is necessary also that it has the above-mentioned structure as a film.

According to the invention, a bridging point can be formed, for example after applying, drying and curing the coat layer, by applying the coating liquid for film while the coat layer surface is in a semi-cured state, or even when the surface is in the completely cured state, a bridging point can be formed by coating the coating liquid for film on this with the proviso that the residual isocyanate group is in a reactive state. It is preferable that this is arbitrarily designed by taking into consideration kinds, using amounts and the like of the components to be used in the formation of the coat layer and film. For example, when the residual isocyanate group is in a reactive state, a bridge structure can be formed by applying the coating liquid for film within 24 hours and allowing it to undergo the photo-curing reaction. In addition, when a residual isocyanate group is in a reactive state and stored at about 5°C, a bridge structure can be formed by applying the coating liquid for film within 5 days and allowing it to undergo the photo-curing reaction. In this connection, when a hydroxyl group-containing monomer is allowed to react with an isocyanate crosslinking agent in advance, it is possible to make a condition under which the residual isocyanate group can perform the reaction even after the preservation at 50°C for 1 week or more.

According to the invention, it is preferable that a fluoroethylene vinyl ether alternating polymer is dissolved in a solvent, a coating liquid for coat layer is formed by adding a polyfunctional isocyanate to this, and a coat layer is formed using this solution. For example, a coat layer is formed by coating this solution on a release-treated polyethylene film and drying it. A coat layer/film laminate can be obtained by coating a mixture containing a urethane polymer (coating liquid for film) on this coat layer and irradiating an ultraviolet ray or the like thereto.

Alternatively, it is preferable that, after allowing a hydroxyl group-containing monomer and a polyfunctional isocyanate to undergo the reaction, a fluoroethylene vinyl ether alternating polymer is added thereto and a coat layer is formed using this solution. For example, a coat layer is formed by coating and drying this solution on a release-treated PET film. A coat layer/film laminate can be obtained by coating a coating liquid for film on this coat layer and irradiating an ultraviolet ray or the like thereto.

The above-mentioned polyfunctional isocyanate has two or more isocyanate groups in the molecule thereof. As the polyfunctional isocyanate, for example, there may be mentioned a bifunctional isocyanate such as hydrogenated xylylene diisocyanate, hexamethylene diisocyanate, isophorone diisocyanate, hydrogenated diphenylmethane diisocyanate, ethylene diisocyanate, 1,4-tetramethylene diisocyanate, trimethylhexamethylene diisocyanate, norbornane diisocyanate and the like, a trifunctional isocyanate such as Desmodur N 3200 (mfd. by Sumika Bayer Urethane Co. Ltd.), CORONATE L (mfd. by NIPPON POLYURETHANE INDUSTRY CO., LTD.), CORONATE HL (mfd. by NIPPON POLYURETHANE INDUSTRY CO., LTD.), CORONATE HX (mfd. by NIPPON POLYURETHANE INDUSTRY CO., LTD.), TAKENATE D-140N (mfd. by Mitsui Chemical Polyurethane Co., Ltd.) TAKENATE D-127 (mfd. by Mitsui Chemical Polyurethane Co., Ltd.) and the like, and the like. According to the invention, these polyfunctional isocyanates can be used alone or as a combination of two or more kinds.

When a hydroxyl group-containing monomer and a polyfunctional isocyanate are allowed to undergo the reaction, ratio of the mol number of hydroxyl groups [OH] of the hydroxyl group-containing monomer and the mol number of isocyanate groups [NCO] of the polyfunctional isocyanate ([OH]/[NCO]) is from 0.05 to 0.5, preferably from 0.05 to 0.4 and further preferably from 0.05 to 0.3.

The above-mentioned hydroxyl group-containing monomer has at least one hydroxyl group in the molecule thereof and also has at least one (meth)acrylic group in the molecule thereof. As the hydroxyl group-containing monomer, for example, there may be mentioned 2-hydroxyethyl acrylate, 2-hydroxy methacrylate, 4-hydroxybutyl acrylate, 4-hydroxybutyl methacrylate, 1,4-cyclohexanedimethanol monoacrylate, 1,4-cyclohexanedimethanol monomethacrylate, 2-hydroxypropyl acrylate, 2-hydroxypropyl methacrylate, pentaerythritol acrylate and the like. According to the invention, these hydroxyl group-containing monomers can be used alone or as a combination of two or more kinds.

The multilayer sheet of the invention can reconcile high strength and high breaking elongation and is also excellent in its flexibility for curved surfaces, and the coat layer arranged on one side or both sides of the substrate layer does not peel off. Further more, the multilayer sheet of the invention is excellent in all characteristics of the antifouling property, weather resistance, heat resistance, chemical resistance and transparency. In this connection, regarding the transparency, it is a passing level when the haze value is 3.0 or less.

The multilayer sheet of the invention is suitable for applications such as a protective multilayer sheet for protecting coated surfaces of transporting machines such as motorcycles, bicycles, railcars, shipping, snowmobiles, gondolas, lifts, escalators, cars, airplanes and the like, particularly cars, airplanes, motorcycles and the like, a photo-conductive film of portable telephone, an encapsulation material of electrode substrate, a decorative film for escalator handrails, a transparent film to be used in combination with transparent glass, and the like.

### EXAMPLES

The following describes the invention in detail using examples, though the invention is not limited thereto. In this connection, in the following examples, the "part" means part(s) by weight and "%" means % by weight unless otherwise noted. In addition, the measuring methods and evaluation methods used in the following examples are shown below.

### (Measuring methods and evaluation methods)

### (1) Evaluation of antifouling property

Each multilayer sheet was fixed on a white coated plate (white acrylic resin baking of a dull steel "JIS-G3141" manufactured by Nippon Testpanel Co., Ltd.) using a double-coated pressure-sensitive adhesive tape (No. 500) manufactured by Nitto Electric Industrial Co., Ltd., applied thereto under pressure by carrying out one reciprocation of the 2 kg roller and allowed to stand at 23°C for 24 hours, and then pebbles of from 2 mm to 5 mm in diameter were hit against the multilayer sheet at 0.4 MPa using a stepping stone tester (mfd. by Suga Test Instruments Co., Ltd.). Thereafter, stains on the surface of the pressure-sensitive adhesive sheet were wiped with a cloth to observe whether or not the stains were wiped out. The result was expressed as "no stains" when the stains were wiped out, or was expressed as "stains present" when the stains were not wiped out.

### (2) Evaluation of weather resistance (yellowing resistance)

Irradiation was canried out for 1,000 hours on each multilayer sheet using Sunshine Weather tester (mfd. by Suga Test Instruments Co., Ltd.). By visually observing the multilayer sheet, the presence or absence of discoloration (yellowing) was verified. A level at which yellowing was not detectable but transparent was expressed as "no yellowing", a level at which yellowing was slightly detectable was expressed as "slight yellowing", and a level at which yellowing was evidently detectable was expressed as "yellowing present".

### (3) Evaluation of heat resistance

Each multilayer sheet was allowed to stand for 500 hours under an atmosphere of 85°C in temperature and 85% in humidity and the presence or absence of discoloration of the multilayer sheet was visually observed. A level at which yellowing was not detectable but transparent was expressed as "no yellowing", a level at which yellowing was slightly detectable was expressed as "slight yellowing", and a level at which yellowing was evidently detectable was expressed as "yellowing present".

### (4) Evaluation of chemical resistance

Chemicals (gasoline, kerosene, gas oil, 3% by weight of sulfuric acid and automobile grease) were dropped down one drop by one drop on each multilayer sheet, and the presence or absence of discoloration was visually observed 24 hours thereafter. A level at which yellowing was not detectable but transparent was expressed as "no yellowing", a level at which yellowing was slightly detectable was expressed as "slight yellowing", and a level at which yellowing was evidently detectable was expressed as "yellowing present".

### (5) Evaluation of transparency

As the evaluation of transparency, haze value of multilayer sheet was measured using a haze meter. That is, haze (haze value) of each multilayer sheet was measured using a haze meter (a haze meter "type HM150" mfd. by Murakami Color Research Laboratory Co., Ltd.). In this connection, when the sheet had a small haze value and was highly transparent, the result was expressed as "highly transparent", and the haze values were also shown.

### (Illustrating Example 1) outside the scope of the claims

### <Preparation of coating liquid for film>

A reaction container equipped with a condenser, a thermometer and a stirrer was charged with 10 parts of acrylic acid (AA), 20 parts of isobornyl acrylate (IBXA) and 20 parts of n-butyl acrylate (BA) as acrylic monomers and 36.4 parts of polyoxy tetramethylene glycol (PTMG) (number average molecular weight 650, mfd. by Mitsubishi Chemical Corporation) as polyol, and while stirring, 13.6 parts of hydrogenated xylylene diisocyanate (HXDI) was added dropwise thereto and allowed to undergo the reaction at 65°C for 10 hours to obtain a urethane polymer-acrylic monomers mixture.

Thereafter, a mixture of a urethane polymer and acrylic monomers (coating liquid for film) was obtained by adding 0.3 part of phenylbis(2,4,6-trimethylbenzoyl)-phosphine oxide ("IRGACURE 819" mfd. by Ciba Japan) as a photopolymerization initiator, 1.25 parts of an ultraviolet ray absorbent consisting of a reaction product of 2-(2,4-dihydroxyphenyl)-4,6-bis(2,4-dimethylphenyl)-1,3,5-triazine with a mono[<C10-C16-alkoxy, mainly C12-C13>methyl]oxirane derivative and 1-methoxy-2-propanol ("TINUVIN 400" mfd. by Ciba Japan) and 1.25 parts of a reaction product of decane diacid bis(2,2,6,6-tetramethyl-1-(octyloxy)-4-piperidinyl) ester, 1,1-dimethylethyl hydroperoxide with octane ("TINUVIN 123" mfd. by Ciba Japan) as a light stabilizer. However, using amount of the polyisocyanate component and polyol component was NCO/OH (equivalent ratio) = 1.25.

### <Preparation of coating liquid for coat layer use>

A reaction liquid was obtained by mixing 0.7 part of 4-hydroxybutyl acrylate ("4HBA" mfd. by Nippon Kasei Chemical Co., Ltd.) and 11.2 parts of a isocyanate crosslinking agent ("CORONATE HX" mfd. by NIPPON POLYURETHANE INDUSTRY CO., LTD) and allowing them to undergo the reaction for 96 hours. A coating solution for coat layer was prepared by adding the thus obtained reaction liquid (11.9 parts) as a curing agent, 3.5 parts of a xylene dilution liquid (solid content concentration 0.01%) of dibutyl tin laurate ("OL 1", mfd. by Tokyo Fine Chemical Co., Ltd.) as a catalyst and further 110 parts of toluene as a dilution solvent, to 100 parts of a xylene and toluene 50% concentration dissolution liquid of fluoroethylene vinyl ether ("LF600", mfd. by Asahi Glass Co., Ltd.).

### <Preparation of multilayer sheet>

The thus obtained coating liquid for coat layer was coated on a release-treated polyethylene terephthalate film (75 µm in thickness) as the temporary support 1 and dried and cured at a temperature of 140°C for 3 minutes to form a fluoroethylene vinyl ether layer. In this connection, thickness of the coat layer after formed into the multilayer sheet was 10 µm.

Within 168 hours after coat layer formation, namely after curing, the thus prepared coating liquid for film was coated on this coat layer to a thickness after curing of 140 µm (150 µm including thickness of the surface coat layer), and a release-treated polyethylene terephthalate (PET) film was put on this. By applying an ultraviolet ray (illuminance: 290 mW/cm², irradiation amount: 4,600 mJ/cm²) to this PET film surface using a metal halide lamp to effect curing, the coat layer and film were formed on the temporary support 1.

### (Example 2)

A coat layer was formed on the temporary support 1 using the coating liquid for coat layer obtained in Illustrating Example 1, and within 168 hours after the formation, the above-mentioned mixture of urethane polymer and acrylic monomers was coated on the coat layer to a thickness after curing of 130 µm. After coating with the coat layer obtained in Illustrating Example 1, the temporary support 2 was put on this. By applying an ultraviolet ray (illuminance: 290 mW/cm², irradiation amount: 4,600 mJ/cm²) from outside of the temporary support 2 on the coat layer using a metal halide lamp to effect curing, a sheet of temporary support 1/coat layer/film/coat layer/temporary support 2 was formed.

### (Comparative Example 1)

A sheet was prepared in the same manner as in Illustrating Example 1, except that the coat layer in Example 1 was not arranged.

Evaluation of antifouling property, weather resistance, heat resistance, chemical resistance (5 species) and transparency was carried out on the sheets obtained in Illustrating Example 1 and Example 2 and Comparative Example 1. Its results are shown in Table 1.

**Table 1**

| Evaluation contents | | Illustrating Example 1 | Example 2 | Comp. Ex. 1 |
|---|---|---|---|---|
| Antifouling property | | no stains | no stains | stains present |
| Weather resistance | | no yellowing | no yellowing | slight yellowing |
| Heat resistance | | no yellowing | no yellowing | slight yellowing |
| Chemical resistance | Gasoline | no yellowing | no yellowing | slight yellowing |
| | Kerosene | no yellowing | no yellowing | slight yellowing |
| | Gas oil | no yellowing | no yellowing | slight yellowing |
| | 3 wt% Sulfuric acid | no yellowing | no yellowing | slight yellowing |
| | Automobile grease | no yellowing | no yellowing | yellowing present |
| Transparency | | highly transparent (1.3) | highly transparent (0.9) | highly transparent (1.4) |

As is clear from Table 1, it was found that the Illustrating Example 1 which has the coat layer on one side of the substrate and the Example 2 that has the coat layer on both sides do not show yellowing even when exposed to ultraviolet rays for a prolonged period of time, are excellent in weather resistance and are also excellent in all of the antifouling property, heat resistance, chemical resistance and transparency.

On the other hand, it was found that the Comparative Example 1 which does not have a coat layer is inferior in at least one or more of the antifouling property, weather resistance, heat resistance, chemical resistance and transparency, and therefore is a problematic sheet.

In addition, since the Example 2 is equipped with a film of the invention which contains a urethane polymer and an acrylic polymer, these are also excellent in strength, flexibility and the like and therefore can sufficiently follow the curved body surface of an adherend such as automobile.

## Claims

1. A multilayer sheet comprising a substrate layer and a coat layer arranged on both sides of the substrate layer, wherein the substrate layer comprises a film including a urethane polymer, wherein the coat layer comprises an isocyanate crosslinking agent and fluoroethylene vinyl ether alternating copolymer represented by the following formula: 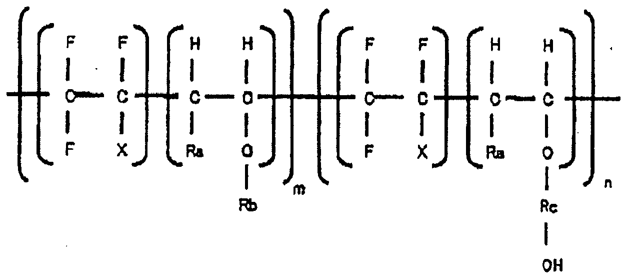
in which X represents fluorine, chlorine or bromine, Ra represents hydrogen or a C1-C10 alkyl group, Rb represents a C1-C16 alkyl group, Rc represents a C1-C16 alkylene group, each of m and n is an integral number, and a weight average molecular weight as determined in the description of the fluoroethylene vinyl ether alternating copolymer is selected within the range of from 1,000 to 2,000,000
wherein the coat layer and the film form a bridge structure obtained through the binding of a coat layer-constituting component with a film-constituting component.

2. A method of producing the multilayer sheet according to claim 1, wherein the film is formed using a coating liquid for film formation which is prepared by adding a photopolymerization initiator to a solution containing an acrylic monomer and a urethane polymer, said solution being obtained by reacting a diol with a diisocyanate in the acrylic monomer as a solvent to form the urethane polymer.

3. The method according to claim 2, wherein the multilayer sheet prepared by: forming a coat layer using a solution obtained by dissolving the fluoroethylene vinyl ether alternating copolymer in a solvent and then adding an isocyanate thereto; coating the coating liquid for film formation on said coat layer; and irradiating an ultraviolet ray thereto, wherein said coat layer and said film are bonded together.

4. The method according to claim 2 or 3, wherein the coat layer is formed using a mixture prepared by adding a solution obtained by dissolving the fluoroethylene vinyl ether alternating copolymer in a solvent to a reaction liquid prepared by reacting a hydroxyl group-containing monomer with a polyfunctional isocyanate.

## Patentansprüche

1. Mehrschichtfolie, umfassend eine Substratschicht und eine Überzugsschicht, die auf beiden Seiten der Substratschicht angeordnet ist, wobei die Substratschicht einen Film umfasst, der ein Urethanpolymer einschließt, wobei die Überzugsschicht ein Isocyanat-Vernetzungsmittel und ein alternierendes Fluorethylen-Vinylether-Copolymer umfasst, das durch die folgende Formel wiedergegeben ist: 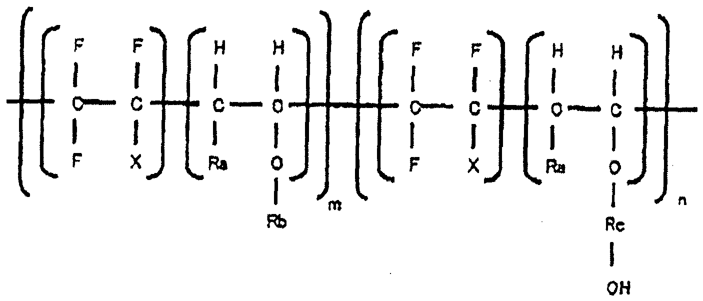
in welcher X Fluor, Chlor oder Brom bedeutet, Ra Wasserstoff oder eine C1-C10-Alkylgruppe bedeutet, Rb eine C1-C16-Alkylgruppe bedeutet, Rc eine C1-C16-Alkylengruppe bedeutet, jedes von m und n eine ganze Zahl ist, und ein wie in der Beschreibung bestimmtes gewichtsgemitteltes Molekulargewicht des alternierenden Fluorethylen-Vinylether-Copolymers innerhalb des Bereichs von 1000 bis 2000000 ausgewählt ist,
wobei die Überzugsschicht und der Film eine Brückenstruktur bilden, die durch die Bindung einer die Überzugsschicht konstituierenden Komponente mit einer den Film konstituierenden Komponente erhalten wird.

2. Verfahren zum Herstellen der Mehrschichtfolie nach Anspruch 1, wobei der Film unter Verwendung einer Beschichtungsflüssigkeit zur Filmbildung gebildet wird, welche hergestellt wird durch Zugeben eines Photopolymerisationsinitiators zu einer Lösung, die ein Acrylmonomer und ein Urethanpolymer enthält, wobei die Lösung erhalten wird durch Umsetzen eines Diols mit einem Diisocyanat in dem Acrylmonomer als ein Lösungsmittel zum Bilden des Urethanpolymers.

3. Verfahren nach Anspruch 2, wobei die Mehrschichtfolie hergestellt wird durch: Bilden einer Überzugsschicht unter Verwendung einer Lösung, die durch Auflösen des alternierenden Fluorethylen-Vinylether-Copolymers in einem Lösungsmittel und anschließend Zugeben eines Isocyanats dazu erhalten wird; Auftragen der Beschichtungsflüssigkeit zur Filmbildung auf die Überzugsschicht; und Bestrahlen mit Ultraviolettstrahlen, wobei die Überzugsschicht und der Film miteinander verbunden werden.

4. Verfahren nach Anspruch 2 oder 3, wobei die Überzugsschicht gebildet wird unter Verwendung einer Mischung, die hergestellt wird durch Zugeben einer Lösung, die durch Auflösen des alternierenden Fluorethylen-Vinylether-Copolymers in einem Lösungsmittel erhalten wird, zu einer Reaktionsflüssigkeit, die durch Umsetzen eines eine Hydroxylgruppe enthaltenden Monomers mit einem polyfunktionellen Isocyanat hergestellt wird.

## Revendications

1. Feuille multicouche comprenant une couche de substrat et une couche de revêtement disposée sur les deux côtés de la couche de substrat, dans lequel la couche de substrat comprend un film incluant un polymère d'uréthane, dans lequel la couche de revêtement comprend un agent de réticulation d'isocyanate et un copolymère alterné de fluoroéthylène et d'éther vinylique représenté par la formule qui suit : 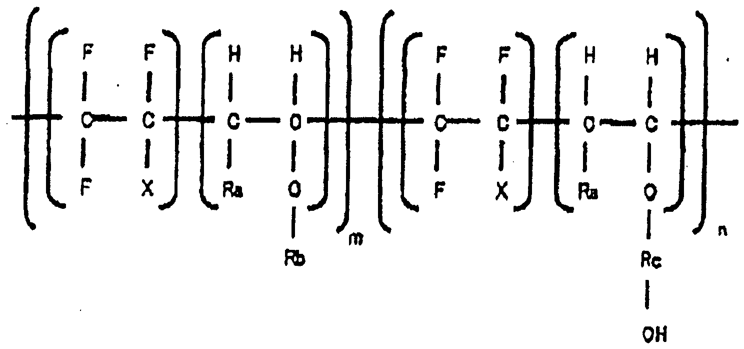
dans laquelle X représente du fluor, du chlore ou du brome, Ra représente de l'hydrogène ou un groupe alkyle en C1 - C10, Rb représente un groupe alkyle en C1 - C16, Rc représente un groupe alkylène en C1 - C16, m et n étant chacun un nombre entier, ainsi qu'un poids moléculaire moyen en poids tels que déterminé dans la description du copolymère alterné de fluoroéthylène et d'éther vinylique qui est sélectionné dans la plage allant de 1000 à 2 000 000,
dans lequel la couche de revêtement et le film forment une structure en pont obtenue grâce à la liaison d'une composante constituant la couche de revêtement et d'une composante constituant le film.

2. Procédé de production d'une feuille multicouche conforme à la revendication 1, dans lequel le film est formé en utilisant un liquide de revêtement en vue de la formation d'un film qui est préparé en ajoutant un initiateur de photopolymérisation à une solution contenant un monomère acrylique et un polymère d'uréthane, ladite solution étant obtenue en faisant réagir un diol avec un diisocyanate dans le monomère acrylique utilisé comme solvant pour former le polymère d'uréthane.

3. Procédé selon la revendication 2, dans lequel la feuille multicouche est préparée par : la formation d'une couche de revêtement en utilisant une solution obtenue en dissolvant le copolymère alterné de fluoroéthylène et d'éther vinylique dans un solvant puis en ajoutant un isocyanate à celle-ci, le dépôt du liquide de revêtement en vue de la formation d'un film sur ladite couche de revêtement, et l'exposition aux rayonnements de celui-ci grâce à un rayon ultraviolet, dans lequel ladite couche de revêtement et ledit film sont liés ensembles.

4. Procédé selon la revendication 2 ou 3, dans lequel la couche de revêtement est formée en utilisant un mélange préparé en ajoutant une solution obtenue en dissolvant le copolymère alterné de fluoroéthylène et d'éther vinylique dans un solvant à un liquide de réaction préparé en faisant réagir un monomère contenant un groupe hydroxyle avec un isocyanate polyfonctionnel.
